# EUROPEAN PATENT APPLICATION

(11) **EP 4 379 012 A1**
(43) Date of publication of application: **05.06.2024**
(21) Application number: 22849360.7
(22) Date of filing: 21.07.2022
(51) Int. Cl.: C09J 167/04

(54) **ADHESIVE COMPOSITION CONTAINING BIODEGRADABLE BIO-POLYMER, ADHESIVE AGENT, AND METHOD FOR CHANGING ADHESIVE STRENGTH OF ADHESIVE AGENT**

(30) Priority: 26.07.2021 JP 2021121217
(71) Applicant: Fuence Co., Ltd., Tokyo 150-0012 (JP)
(72) Inventor: INOUE, Kozo, Tokyo 150-0012 (JP); KUMAR, K. Sudesh, Gelugor Penang 11700 (MY); MIYAUCHI, Hironaga, Tokyo 150-0012 (JP)
(74) Representative: Script IP Limited
(86) International application number: PCT/JP2022/028306
(87) International publication number: WO 2023/008298

(57) **Abstract**

Provided are an adhesive composition comprising polyhydroxyalkanoic acid, wherein the polyhydroxyalkanoic acid substantially consists of 3-hydroxybutanoic acid and 3-hydroxyhexanoic acid as repeating units; an adhesive agent; and a method for adjusting the adhesive strength of the adhesive agent, thereby providing an adhesive agent comprising an adhesive composition that, in addition to being biodegradable and biocompatible, is suitable for a wide range of applications, such as pharmaceutical applications.

## Description

### Technical Field

The present invention relates to an adhesive composition comprising polyhydroxyalkanoic acid (PHA), that is a biodegradable polymer, in which the polyhydroxyalkanoic acid (PHA) substantially consists of 3-hydroxybutanoic acid (3-HB) and 3-hydroxyhexanoic acid (3-HH) as repeating units; an adhesive agent comprising the adhesive composition; and a method for changing adhesive strength of the adhesive agent, by changing content proportions of the 3-hydroxybutanoic acid and the 3-hydroxyhexanoic acid in the adhesive composition contained in the adhesive agent.

### Background Art

Various new materials have been developed, diverse materials have been combined, and composite materials and a wide variety of products assembled from them have been developed one after another, whereby our lives have become convenient and prosperous. Since the development of new materials creates new fields of application, it stimulates the development of further new materials. Such a cycle is likely to be repeated in the future, and the role of an adhesive agent, a sealing material, or an adhesive technology in such a cycle is expected to become increasingly important with the development of new materials.

On the other hand, the development of product technologies, including the development of new materials in the future, is expected to develop in a way that minimizes the impact on the environment, given the circumstances surrounding product development. In addition to conventional problems of fluctuating raw material oil prices and inconsistent raw material supply, adhesive agents made of synthetic resins also have a negative impact on the environment, not only emitting greenhouse gases in the production process but also causing various environmental problems, such as, after being used in the production process or as a product, the flow of waste water passing through wastewater treatment plants or the final product being collapsed, dumped, or discarded into rivers and oceans. Therefore, there is an urgent need to solve the problems of synthetic resins as raw materials for adhesive agents on a global scale.

In particular, contamination of microplastics in the ocean has recently become a problem. For example, when plastic waste is crushed by waves and UV rays, it becomes microplastic of 5 millimeters long or less, and such microplastics accumulate in fish bodies. In 50 years, plastic waste in the sea would exceed the total weight of fish, and reducing plastic waste has become an urgent problem for human beings. Therefore, even in industrial fields where the use of adhesive agents made of synthetic resins is essential, there is an urgent need to replace synthetic resins conventionally used as the raw material from the viewpoint of reducing contamination due to the adhesive agents.

In addition, adhesive agents, sealing materials, or adhesive technologies have already been in great demand in medical fields as essential elements of product technology in means for drug delivery, hemostasis, or the like. In these medical fields, adhesive agents using raw materials derived from animals and plants are also used from the viewpoint of safety, but further improvements in safety and performance are required. Therefore, it has become essential to have more useful physical properties and performance as adhesives, sealing materials, or adhesive technologies in the medical field, while satisfying conditions such as biocompatibility and biodegradability to enable safe use in vivo.

Furthermore, since adhesives, sealing materials, or adhesive technologies are applied to a wide range of fields, high adhesive strength is not always required. Variable adhesive strength depending on the application, such as the requirement of easy opening properties with appropriate adhesive strength, is also becoming an important technical factor to consider in the adhesives, sealing materials, or adhesive technologies.

As one of the solutions to these problems, the use of an adhesive composition or an adhesive agent made from biodegradable biopolymers has been proposed in various forms and aspects.

Patent Document 1 describes a method for bonding an article using an adhesive composition containing a copolymer of hydroxybutyric acid and hydroxyvaleric acid as polyhydroxyalkanoate, in which polyhydroxyalkanoate particles are applied as a latex in water, and pressure is then applied to the article to cure an adhesive agent. Patent Document 2 describes a hot-melt adhesive using a copolymer of 3-hydroxybutyrate, 3-hydroxyvalerate, and 3-hydroxy-4-methylvalerate as a plastic product containing a biodegradable polyhydroxyalkanoate copolymer. Patent Document 3 describes a medical adhesive resin composition containing polyhydroxyalkanoic acid and having excellent biocompatibility and low skin irritation. Patent Document 4 describes an adhesive composition using 3-hydroxybutyrate and 4-hydroxybutyrate having specific glass transition temperatures as polyhydroxyalkanoic acids, the adhesive composition being defined by surface tack time. Patent Document 5 describes a hot-melt adhesive composition comprising a lactic acid oligomer/polymer, polylactic acid, an aliphatic amide, a terpene resin as a tackifying resin, and polyvinyl acetate. In addition, Patent Document 6 describes a biodegradable adhesive agent comprising at least one resin selected from the group consisting of polybutylene succinate and polybutylene succinate adipate and polylactic acid, the biodegradable adhesive agent having excellent film-forming properties in a lamination method and exhibiting excellent adhesive strength and easy opening properties.

Furthermore, Non-patent Document 1, a general document, widely describes the necessity and direction of future development of an adhesive agent based on a biopolymer.

However, the technical matters described in these prior art documents have not led to the practical application and provision of an adhesive composition having desired physical properties that makes full use of features of a biodegradable material and can be applied to a wide range of applications as an adhesive agent and an adhesive technology.

### Prior Art Documents

### Patent Documents

Patent Document 1: Japanese unexamined Patent Application Publication (Translation of PCT Application) No. 9-500157
Patent Document 2: Japanese unexamined Patent Application Publication (Translation of PCT Application) No. 2002-532618
Patent Document 3: Japanese unexamined Patent Application Publication No. 2010-17361
Patent Document 4: Japanese Patent No. 5079321
Patent Document 5: International Publication No. WO 2014/074115
Patent Document 6: Japanese unexamined Patent Application Publication No. 2020-176230

### Non-patent Documents

Non-patent Document 1: Brief Overview on Bio-Based Adhesives and Sealants Polymers 2019, 11(10), 1685

### Summary of the Invention

### Object to be Solved by the Invention

Therefore, there has been a demand for the use of polyhydroxyalkanoic acid, a biodegradable biopolymer, as a raw material for an adhesive composition constituting an adhesive agent to address environmental issues in the production process of the adhesive agent and in the treatment process after use as a product, as well as a demand for providing an adhesive composition that is compatible with diverse adhesive functions required in a wide range of applications, including medical applications.

### Means to Solve the Object

As a result of studies to solve the above problems, the present inventors have found that a composition comprising polyhydroxyalkanoic acid substantially consisting of 3-hydroxybutanoic acid (3-HB) and 3-hydroxyhexanoic acid (3-HH) as repeating units of such polyhydroxyalkanoic acid (PHA) has desired physical properties as an adhesive composition, based on the finding that the polyhydroxyalkanoic acid (PHA) having excellent melt flowability can be produced by a method including the steps of: providing a microorganism that produces polyhydroxyalkanoic acid (PHA); growing the microorganism in a medium; causing an animal to ingest a grown microorganism; and recovering the polyhydroxyalkanoic acid (PHA) from the excreta of the animal, and also found that the melting point of the polyhydroxyalkanoic acid is set to a desired range by changing the content proportions of 3-hydroxybutanoic acid and 3-hydroxyhexanoic acid (3-HH) in such an adhesive composition, leading to a change in the adhesive strength of the adhesive composition containing a copolymer. Thus, they have completed the present invention (for the above finding, see Japanese Patent Application No. 2019-086889 filed on April 26, 2019).

In other words, the present inventors have confirmed that an adhesive composition containing polyhydroxyalkanoic acid (PHA) in which the polyhydroxyalkanoic acid (PHA) substantially consists of 3-hydroxybutanoic acid (3-HB) and 3-hydroxyhexanoic acid (3-HH) as repeating units thereof has the desired physical properties, and the adhesive strength of the adhesive agent containing the adhesive composition is changed by changing the content proportions of the 3-hydroxybutanoic acid and the 3-hydroxyhexanoic acid (3-HH) in the adhesive composition, thus completing the present invention.

The present invention is as specified by particular matters below.
(1) An adhesive composition comprising polyhydroxyalkanoic acid, wherein the polyhydroxyalkanoic acid substantially consists only of 3-hydroxybutanoic acid and 3-hydroxyhexanoic acid as repeating units.
(2) The adhesive composition according to (1), wherein the polyhydroxyalkanoic acid is contained as a copolymer of 3-hydroxybutanoic acid and 3-hydroxyhexanoic acid, P (3-HB-co-3-HH).
(3) An adhesive agent comprising the adhesive composition according to (1) or (2).
(4) The adhesive agent according to (3), wherein the adhesive agent is a hot-melt adhesive.
(5) A method for changing an adhesive strength of the adhesive agent according to (3) or (4), by changing a content proportion of the 3-hydroxybutanoic acid and the 3-hydroxyhexanoic acid in the adhesive composition contained in the adhesive agent.

### Effect of the Invention

According to the present invention, an adhesive composition comprising polyhydroxyalkanoic acid (PHA) has biodegradability and biocompatibility in a natural environment by containing substantially only 3-hydroxybutanoic acid (3-HB) and 3-hydroxyhexanoic acid (3-HH) as repeating units of the polyhydroxyalkanoic acid (PHA). The present invention also provides an adhesive composition that can be used as a hot-melt adhesive with excellent processability. The present invention further provides an adhesive agent that can be used in a wider range of applications since the adhesive strength of an adhesive agent can be changed by changing the content proportions of 3-hydroxybutanoic acid (3-HB) and 3-hydroxyhexanoic acid (3-HH) in an adhesive composition containing polyhydroxyalkanoic acid substantially consisting of only 3-hydroxybutanoic acid (3-HB) and 3-hydroxyhexanoic acid (3-HH) as repeating units of the polyhydroxyalkanoic acid (PHA) .

Thus, the present invention provides an adhesive composition comprising the polyhydroxyalkanoic acid (PHA), the adhesive composition having physical properties that can be used in a wide range of applications with biodegradability, biocompatibility, and excellent processability; an adhesive agent; and a method for changing the adhesive strength of the adhesive agent.

Since the adhesive composition according to the present invention can be provided as an adhesive composition with excellent biodegradability in a natural environment, it can contribute to the resolution of marine pollution or microplastic problems, for example. In addition, the adhesive composition is expected to reduce environmental impact since it allows the material to be biodegraded instead of being incinerated for disposal. Furthermore, since the adhesive composition and the adhesive agent according to the present invention can be used for a wide range of applications by changing the adhesive strength, in addition to the biocompatibility and biodegradability possessed by polyhydroxyalkanoic acid (PHA), they have the potential to be used for a wide range of medical applications in addition to conventional applications as adhesive agents.

### Mode of Carrying Out the Invention

Next, specific embodiments, including the best mode for carrying out the present invention, will be described.

### [Polyhydroxyalkanoic Acid (PHA)]

Polyhydroxyalkanoic acid (PHA) is a polyester of hydroxyalkanoic acid given as an example in chemical formula (1) below and a biodegradable polymer. 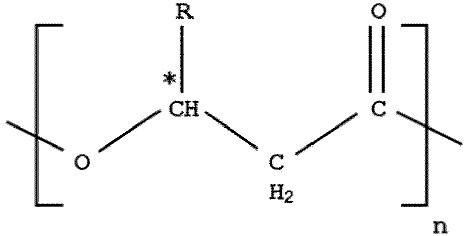 (In chemical formula (1), R represents an alkyl group.)

As repeating units of the polyhydroxyalkanoic acid (PHA), 3-hydroxyalkanoic acid represented by the following chemical formula (2) and 4-hydroxyalkanoic acid represented by the following chemical formula (3) are known. 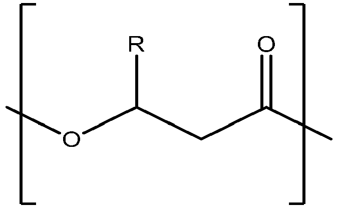 (In chemical formula (2), R represents an alkyl group.)

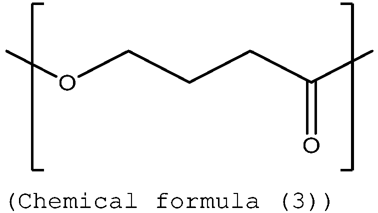

Examples of the alkyl group (R) in the unit of 3-hydroxyalkanoic acid (3-HA) include a methyl group, an ethyl group, a propyl group, a butyl group, a pentyl group, a hexyl group, a heptyl group, an octyl group, a nonyl group, a decyl group, an undecyl group, a dodecyl group, and a tridecyl group.

The polyhydroxyalkanoic acid (PHA) according to the present invention contains, as its repeating units, substantially only 3-hydroxybutanoic acid (3-HB) represented by the following chemical formula (4) in which an alkyl group in the 3-hydroxyalkanoic acid unit is a methyl group, and 3-hydroxyhexanoic acid (3-HH) represented by the following chemical formula (5) in which an alkyl group in the 3-hydroxyalkanoic acid unit is a propyl group. In the case of containing units of the 3-hydroxybutanoic acid (3-HB) and 3-hydroxyheptanoic acid (3-HH) as its repeating units, the polyhydroxyalkanoic acid (PHA) according to the present invention preferably contains them as a copolymer of the 3-hydroxybutanoic acid (3-HB) and 3-hydroxyhexanoic acid (3-HH), P (3-HB-co-3-HH).

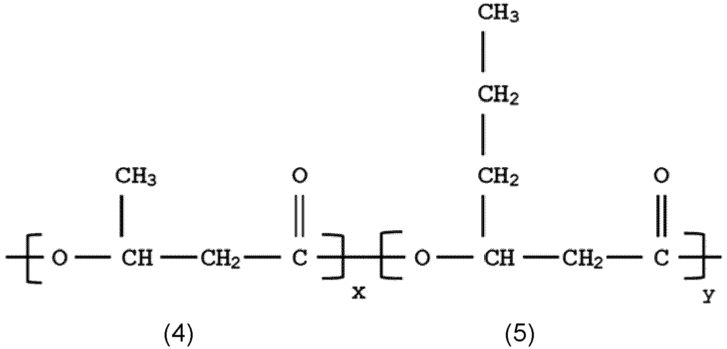

In the adhesive composition according to the present invention, the polyhydroxyalkanoic acid substantially consists of 3-hydroxybutanoic acid and 3-hydroxyhexanoic acid as repeating units, and the content proportion of 3-hydroxyhexanoic acid (3-HH) in the repeating units of the polyhydroxyalkanoic acid (PHA) according to the present invention is preferably 20% by weight or more and preferably 27% by weight or less, based on the total amount of the repeating units of the polyhydroxyalkanoic acid (PHA). The adhesive strength of the polyhydroxyalkanoic acid can be changed by changing the content proportion of 3-hydroxyhexanoic acid (3-HH) in the total amount of the repeating units of the polyhydroxyalkanoic acid. When the content proportion of 3-hydroxyhexanoic acid (3-HH) is 20% by weight or less based on the total amount of the repeating units of the polyhydroxyalkanoic acid, sufficient adhesive properties as polyhydroxyalkanoic acid may not be obtained. In a case where the weight ratio is 27% or more based on the total amount of the repeating units of the polyhydroxyalkanoic acid (PHA), it may be difficult to prepare the composition containing the polyhydroxyalkanoic acid as an adhesive agent since the viscosity of the composition increases.

Although the method for producing the polyhydroxyalkanoic acid (PHA) according to the present invention is not particularly limited as described in [Method for Producing Polyhydroxyalkanoic Acid (PHA)] below, a production method using a microorganism is an effective production method. When a production method using a microorganism is applied, 3-hydroxyalkanoic acid and 4-hydroxyalkanoic acid other than 3-hydroxybutanoic acid and 3-hydroxyhexanoic acid may be mixed as impurities as a repeating unit of the polyhydroxyalkanoic acid (PHA) to be produced. However, it is possible to produce the polyhydroxyalkanoic acid according to the present invention substantially containing only 3-hydroxybutanoic acid and 3-hydroxyhexanoic acid without impurities or with only an extremely small amount of impurities, by adjusting a culture solution and culture conditions. Therefore, the polyhydroxyalkanoic acid "substantially containing only 3-hydroxybutanoic acid and 3-hydroxyhexanoic acid" in the present invention includes polyhydroxyalkanoic acid without impurities or with only an extremely small amount of impurities, which is obtained by adjusting the culture solution and culture conditions in the production method using a microorganism.

In another embodiment of the polyhydroxyalkanoic acid (PHA) according to the present invention, the polyhydroxyalkanoic acid (PHA) has a weight average molecular weight of 1.0 × 10⁵ to 13.0 × 10⁵ g/mol, preferably 3.0 × 10⁵ to 10.0 × 10⁵ g/mol, and more preferably 3.0 × 10⁵ to 8.0 × 10⁵ g/mol. When the weight average molecular weight of the polyhydroxyalkanoic acid (PHA) is in the above-mentioned range, it is possible to provide polyhydroxyalkanoic acid (PHA) having controllable solubility in a solvent, heat resistance, and durability. However, when the weight average molecular weight is out of the above-mentioned range, such effects may not be obtained.

In another embodiment of the polyhydroxyalkanoic acid (PHA) according to the present invention, the melting point of the polyhydroxyalkanoic acid (PHA) can be adjusted to 60°C or more and 90°C or less by adjusting the content proportion of 3-hydroxyhexanoic acid (3-HH) in the repeating unit of the polyhydroxyalkanoic acid (PHA) according to the present invention to 20% by weight or more and 27% by weight or less, based on the total amount of the repeating units of the polyhydroxyalkanoic acid (PHA). By setting the melting point of the polyhydroxyalkanoic acid (PHA) within the above range, the processability is increased, which is advantageous for providing an adhesive agent comprising an adhesive composition containing the polyhydroxyalkanoic acid (PHA) as a hot-melt adhesive. Note that the polyhydroxyalkanoic acid (PHA) melting point can be measured by any method, for example, by DSC analysis.

### [Method for Producing Polyhydroxyalkanoic Acid (PHA)]

The method for producing polyhydroxyalkanoic acid (PHA) according to the present invention is not particularly limited and may be any production method as long as polyhydroxyalkanoic acid (PHA) having the characteristics of the polyhydroxyalkanoic acid according to the present invention can be obtained.

For example, an embodiment of the method for producing polyhydroxyalkanoic acid (PHA) according to the present invention may include the following steps:
Step 1 : providing a microorganism that produces polyhydroxyalkanoic acid (PHA);
Step 2 : growing the microorganism of Step 1 in a medium;
Step 3 : causing an animal to ingest a grown microorganism; and
Step 4 : recovering and purifying the polyhydroxyalkanoic acid (PHA) from excreta of the animal in Step 3.

The polyhydroxyalkanoic acid (PHA) according to the present invention is preferably produced using a microorganism, and examples thereof include a microorganism capable of producing polyhydroxyalkanoic acid, such as *Bacillus megaterium, Cupriavidus necator, Ralstonia eutropha,* and *Alcaligenes latus.* Among them, *Cupriavidus necator* is particularly preferred.

The microorganism is preferably one in which a gene involved in the synthesis of polyhydroxyalkanoic acid (PHA) has been deleted or introduced. For example, it is preferable to use a microorganism in which an acetoacetyl-CoA reductase gene is deleted. It is also preferable to introduce a hydroxyalkanoate synthase gene or enoyl-CoA hydratase gene. Accordingly, the content of the unit of 3-hydroxyhexanoic acid (3-HH) contained in the polyhydroxyalkanoic acid can be increased. In addition, it is possible to produce a copolymer P (3HB-co-3HH) consisting of 3-hydroxybutanoic acid (3-HB) and 3-hydroxyhexanoic acid (3-HH), which has high melt flowability and excellent processability.

The medium to be used for culturing microorganisms is not particularly limited as long as the microorganisms can grow in the medium. For example, the medium contains, as carbon sources, an alcohol such as methanol, ethanol, and butanol; a fatty acid including a saturated or unsaturated fatty acid such as acetic acid, propionic acid, hexanoic acid, octanoic acid, decanoic acid, lauric acid, oleic acid, palmitic acid, linoleic acid, linolenic acid, and myristic acid; a saccharide such as glucose and fructose; an organic acid such as lactic acid; and fat or oil containing a large amount of a saturated or unsaturated fatty acid having 10 or more carbon atoms. Examples of the fat or oil include a vegetable oil such as coconut oil, palm kernel oil, palm oil, palm olein, rapeseed oil, soybean oil, rice oil, and sesame oil; an animal fat or oil such as lard and beef tallow; and fish oil. Note that the fat or oil before purification and waste cooking oil can also be used. Preferred fat or oil to be added to the medium as a carbon source is palm kernel oil or palm oil containing lauric acid. The polyhydroxyalkanoic acid (PHA) content can be increased by inclusion of palm kernel oil or palm oil.

The microbial culture conditions for producing the polyhydroxyalkanoic acid (PHA) according to the present invention are preferably aerobic conditions. If necessary, a nitrogen source or an inorganic substance is optionally added. Examples of the nitrogen source include an ammonium salt such as ammonia, ammonium chloride, ammonium sulfate, and ammonium phosphate. Examples of the inorganic substance include monopotassium phosphate, dipotassium phosphate, magnesium phosphate, magnesium sulfate, and sodium chloride.

The culture temperature is preferably 20°C to 40°C, and more preferably 25°C to 35°C. The culture time is not particularly limited but is preferably 48 to 72 hours.

In the method for producing the polyhydroxyalkanoic acid (PHA) according to the present invention, the content of 3-hydroxyhexanoic acid (3-HH) in the copolymer of the 3-hydroxybutanoic acid (3-HB) and the 3-hydroxyhexanoic acid (3-HH) can be controlled by regulating expression levels of the acetoacetyl-CoA reductase gene and the enoyl-CoA hydratase gene.

In addition, the 3-hydroxyhexanoic acid (3-HH) content in the copolymer of the 3-hydroxybutanoic acid (3-HB) and the 3-hydroxyhexanoic acid (3-HH) can also be controlled by controlling the remaining amount of carbon sources, adjusting the concentration of inorganic components in the culture solution, and adjusting the volume of oxygen aeration and the culture time.

Although methods of recovering and purifying polyhydroxyalkanoic acid (PHA) are not particularly limited, examples thereof include a method of recovering polyhydroxyalkanoic acid (PHA) from the culture medium by centrifugation and extracting it with a solvent or the like; and a method of recovering polyhydroxyalkanoic acid (PHA) as excreta by causing an animal to digest and absorb the microorganisms. From the viewpoint of easy concentration of the polyhydroxyalkanoic acid (PHA), a method of causing an animal to digest and absorb the microorganisms to recover granular polyhydroxyalkanoic acid (PHA) contained in excreta is preferred.

Example of the above animal include an animal such as rodent, goat, sheep, cattle, bird, an aquatic organism, a beetle, and an insect. Among them, larvae of beetles such as mealworms are preferred, and 35 day-old beetles eating housefly *(Tenebrio molitor* larvae) are more preferred.

The polyhydroxyalkanoic acid (PHA) can be recovered by feeding the above-mentioned microorganisms to larvae of mealworms or the like, followed by collection of fecal pellets, sieving with a mesh, washing with water, a base such as sodium hydroxide, and drying.

Specific aspects of the method for producing the polyhydroxyalkanoic acid (PHA) are given as examples below.

### (1) Method for Producing P (3-HB-co-3-HH)

### (a) Preparation of mineral medium for production of P (3HB-co-3HH)

A mineral medium for the production of P (3HB-co-3HH) consisted of 4.0 g/L of NaH₂PO₄, 4.6 g/L of Na₂HPO₄, 0.45 g/L of K₂SO₄, 0.39 g/L of MgSO₄, 62 mg/L of CaCl₂, and 1 mL/L of trace element solution (the trace element solution contained 15 g/L of FeSO₄·7H₂O, 2.4 g/L of MnSO₄·H₂O, 2.4 g/L of ZnSO₄·7H₂O, and 0.48 g/L of CuSO₄·5H₂O, all of which had been dissolved in 0.1 M HCl). The pH of the medium was adjusted to 7.0 before sterilization by autoclaving.

### (b) Biosynthesis of P (3HB-co-3HH) using 13-L fermenter

Biosynthesis of P (3HB-co-3HH) was carried out using Cupriavidus necator into which a polyhydroxyalkanoate synthase gene had been introduced.

First, Cupriavidus necator transfected with a gene encoding polyhydroxyalkanoate synthase was streaked onto an agar plate and cultured at 30°C for 24 hours. Next, as a pre-culture, a 50 mL culture solution was inoculated with the Cupriavidus necator twice using an inoculation loop, and the culture solution was shaken in an incubator shaker at 30°C for eight hours until the OD600 nm of the culture solution reached 4. About 3 mL of the culture solution was inoculated into 100 mL of a mineral medium supplemented with 0.54 g/L of urea, 0.39 g/L of MgSO₄, 62 mg/L of CaCl₂, 1 mL/L of trace element solution, and 1% by mass of crude palm kernel oil. The crude palm kernel oil was autoclaved before addition to the mineral medium. The mineral medium was further cultured for 18 hours and inoculated into a 6 L fermenter. The morphology of the inoculated Cupriavidus necator was checked before transfer to the fermenter (10% v/v). The temperature of the culture medium was maintained at 30°C while the pH of the medium was set at 7.0 ± 0.1 by the addition of 3 M NaOH and 3 M H₃PO₄. Stirring was performed using a Rushton turbine at a stirring rate of 200 to 900 rpm. Air was supplied at 1 vvm (air volume/fermenter working volume/ min) through a filter cartridge (Sartorius stedim, Germany) to maintain the dissolved oxygen concentration at 40% or more. MgSO₄·7H₂O was added at the 18th hour, and urea every 6 hours after culturing. Trace elements were added at 1 mL during planting and at 18 hours of culturing. Crude palm kernel oil was supplied at a concentration of 10 g/L to 20 g/L every six hours, depending on the oil consumption by microorganisms. Sampling was performed every six hours to determine the residual oil content, wet cell weight, and optical density of the bacterial cultures. Culture times ranged from 48 hours to 72 hours depending on bacterial growth.

### (c) Biological recovery of P (3HB-co-3HH)

Thirty five day-old mealworms *(Tenebrio molitor* larvae) were reared in plastic containers at ambient temperatures (about 25°C). Dry microorganisms containing the above P (3HB-co-3HHx) were fed to 100 g of the reared mealworms.

The amount of microorganisms fed was based on the weight of the mealworms (5% per day of body weight). Before feeding a new batch of microorganisms, mealworms' fecal pellets were collected and sieved using meshes of sizes 0.50 mm and 0.25 mm. Through double sieving, it was possible to remove other impurities and to facilitate the subsequent washing step.

### (d) Purification of P (3HB-co-3HH) using distilled water

About 10% (w/v) of the fecal pellets were each added to tap water to a concentration of 100 g/L. The fecal pellet suspension was rinsed several times and allowed to settle before discarding the supernatant. The supernatant was removed, and the recovered P (3HB-co-3HH) was dried in an oven at 50°C to a constant mass.

The dried P (3HB-co-3HH) was further rinsed in 0.25 M NaOH for one hour, the mixture was allowed to settle to remove the supernatant, and the collected pellets were stirred in tap water for another one hour until the pH dropped below 9.5. Then, the recovered P (3HB-co-3HH) granules were dried to a constant mass in an oven at 50°C to recover the desired P (3HB-co-3HH).

### [Adhesive Composition Containing Polyhydroxyalkanoic Acid (PHA)]

The adhesive composition according to the present invention may use only the polyhydroxyalkanoic acid (PHA) but may contain a solvent in addition to the polyhydroxyalkanoic acid (PHA). The content of the solvent can be appropriately selected, for example, in the range of 5 to 90% by weight. Examples of the solvent include an organic solvent, such as, but not limited to, methanol, ethanol, ethyl acetate, dimethyl acetate, chloroform, acetonitrile, and hexane, and it is also possible to use two or more solvents as a mixed solvent.

The adhesive composition according to the present invention can also be mixed with another additive to form an adhesive composition. Examples of the other additive to be used include a resin other than the polyhydroxyalkanoic acid (PHA) of the present invention, a tackifier, a plasticizer, and an inorganic filler depending on the intended use.

Examples of the resin other than the polyhydroxyalkanoic acid (PHA) to be used in the adhesive composition according to the present invention include a thermoplastic resin and a thermosetting resin, and example thereof include a polyolefin resin such as polyethylene and polypropylene, polyimide, polyamide, polyphenylene ether, polyether ketone, polyether ketone ketone, polybutadiene, polystyrene, polyester, polylactic acid, a phenol resin, poly(meth)acrylic acid, and a norbornene resin. Among them, a biodegradable resin such as polylactic acid is preferred as another resin to be added to the adhesive composition because the adhesive composition according to the present invention uses polyhydroxyalkanoic acid, a biodegradable polymer.

An additive normally used in an adhesive composition can be used depending on the application of the adhesive composition, for example, a terpene resin, a rosin-rosin derivative, or a coumarone-indene resin as a tackifier to be used in the adhesive composition according to the present invention; a phthalate ester, lanolin, or mineral oil as a plasticizer; and calcium carbonate or zinc oxide as an inorganic filler.

Although the proportion of components constituting the adhesive composition according to the present invention is not particularly limited, in an embodiment in which the polyhydroxyalkanoic acid (PHA) is dissolved in a solvent, the proportion of the polyhydroxyalkanoic acid (PHA) to be dissolved is at most about 50% by weight in consideration of the viscosity of the solution and the like.

### [Adhesive Agent Comprising Adhesive Composition Containing Polyhydroxyalkanoic Acid (PHA)]

The adhesive composition containing polyhydroxyalkanoic acid (PHA) can be used as an adhesive agent in any form of a solution-based adhesive, a water-dispersible adhesive including an underwater latex-based adhesive in which polyhydroxyalkanoic acid (PHA) is emulsified and dispersed in water, a solvent-free adhesive, and a solid-based adhesive. In particular, a hot-melt adhesive is excellent in environmental aspects because it is nonflammable and free of moisture and solvents, and the effect of using an adhesive composition containing polyhydroxyalkanoic acid (PHA), a biodegradable polymer, is significant. The adhesive agent according to the present invention can be produced in an ordinary manner by using the adhesive composition according to the present invention, and the method of producing the adhesive agent is not particularly limited.

The present invention will be described in more detail below with Examples. Note that the present invention is in no way limited thereto.

### Examples

### [Example 1] Measurement of Adhesive Property of Adhesive Composition Containing Polyhydroxyalkanoic Acid with 27% of 3-Hydroxyhexanoic Acid (3-HH)

A polyhydroxyalkanoic acid (PHA) consisting of 3-hydroxybutanoic acid (3-HB) and 3-hydroxyhexanoic acid (3-HH) as a repeating unit of the polyhydroxyalkanoic acid was produced by the above-described method for producing polyhydroxyalkanoic acid (PHA).

It was confirmed that the content proportion of 3-hydroxyhexanoic acid (3-HH) based on the total amount of the repeating units of the polyhydroxyalkanoic acid (PHA) was 27% by weight, and 3-hydroxybutanoic acid (3-HB) and 3-hydroxyhexanoic acid (3-HH) existed in a copolymer with a structure of P (3HB-co-3HH) in the produced polyhydroxyalkanoic acid. The obtained polyhydroxyalkanoic acid containing 27% of 3-hydroxyhexanoic acid (3-HH) had a melting point of 81.21°C.

Using the adhesive composition containing the copolymer with the obtained structure of P (3-HB-co-3-HH), the measurement of adhesive strength was performed as follows:
1) According to JIS K 6850 (tensile shear adhesive strength), the following metal plates, glass, resin and wood were used as samples, and only the copolymer with the structure of P (3-HB-co -3 HH) was used as a hot-melt adhesive without using any solvent to measure the adhesive strength.
2) The samples were each cut into a size of 25 mm in width and 100 mm in length according to JIS K 6850 and used.
3) The adhesive agent was used in an amount of 0.02 g per sample and was evenly applied over the entire width in a range of 12.5 mm from the edge of the sample.
4) The adhesive portion of the 12.5 mm edge of the sample and the other sample were overlapped and fixed with a double clip, then placed in an oven at 90°C for 2 hours.

The samples used for adhesion evaluation were as follows:
Glass: transparent glass with a thickness of 2.1 mm
Iron (steel plate): 0.25 mm thick
Aluminum: 1 mm thick
Stainless steel: 0.3 mm thick
Polystyrene: 1.2 mm thick
Polypropylene: 0.8 mm thick
Polyacrylate: 1 mm thick
Polyvinyl chloride: 1 mm thick
Plywood: 2.6 mm thick

5) The tensile shear adhesive strength was measured with a Tensilon universal testing machine, RTC-1325, manufactured by Orientec Co., Ltd. The lap tensile shear strength of an adhesive joint between rigid adherends was measured by applying a tensile force parallel to the adhesive portion and the main axis of the test piece to the adherends and applying a load to the simple lap portion between the rigid adherends. The tensile speed was set at 1 mm per minute with the testing machine for measurement. The measurement results were as follows:
Glass: 1.14 N/mm²
Iron (steel plate): 0.83 N/mm²
Aluminum: 1.20 N/mm²
Stainless steel: 1.07 N/mm²
Polystyrene: 0.52 N/mm²
Polypropylene: 0.30 N/mm²
Polyacrylate: 0.87 N/mm²
Polyvinyl chloride: 0.78 N/mm²
Plywood board: 0.65 N/mm²

### [Example 2] Measurement of Adhesive Property of Adhesive Composition Containing Polyhydroxyalkanoic Acid with 200 of 3-Hydroxyhexanoic Acid (3-HH)

In order to investigate the influence of the content proportions of 3-hydroxybutanoic acid and 3-hydroxyheptanoic acid in the polyhydroxyalkanoic acid on the adhesive strength, polyhydroxyalkanoic acid (PHA) in which the proportion of 3-hydroxyhexanoic acid (3-HH) based on the total amount of the repeating units of the polyhydroxyalkanoic acid (PHA) was 20% by weight was produced in accordance with the production method described in Example 1. It was confirmed that the content proportion of 3-hydroxyhexanoic acid (3-HH) based on the total amount of the repeating units of the polyhydroxyalkanoic acid obtained was 20% by weight, and 3-hydroxybutanoic acid (3-HB) and 3-hydroxyhexanoic acid (3-HH) existed in a copolymer with a structure of P (3HB-co-3HH). The obtained polyhydroxyalkanoic acid containing 200 of 3-hydroxyhexanoic acid (3-HH) had a melting point of 75.82°C.

The measurement was performed under the same measurement conditions as those of Example 1, and polyacrylate and polyvinyl chloride used in Example 1 were used as samples.

The measurement results of the tensile shear adhesive strength were as follows:
Acrylic: 0.41 N/mm²
Polyvinyl chloride: 1.08 N/mm²

According to the above results, the adhesive composition according to the present invention in which the polyhydroxyalkanoic acid substantially consists of 3-hydroxybutanoic acid and 3-hydroxyhexanoic acid as repeating units exhibited good adhesion to glass, iron (steel plate), aluminum, stainless steel, polystyrene, polypropylene, polyacrylate, polyvinyl chloride, and wood chips, and therefore it was confirmed that the adhesive composition containing the polyalkanoic acid according to the present invention can be used in a wide range of applications as an adhesive agent. Regarding the adhesive strength, it was confirmed that the tensile shear adhesive strength was equivalent to that of a commercially available hot-melt stick type. In addition, in the adhesive agent according to the present invention, the melting point of the polyhydroxyalkanoic acid (PHA) could be set in the range of 60°C to 90°C by changing the content proportions of 3-hydroxybutanoic acid and 3-hydroxyhexanoic acid in the adhesive composition, which confirmed that the adhesive agent can be used as a hot-melt adhesive with excellent processability. The adhesive agent according to the present invention can also be used according to various use environments and applications since it was confirmed that the adhesive strength could be changed by changing the blending ratio of 3-hydroxybutanoic acid and 3-hydroxyhexanoic acid as a repeating unit of the polyhydroxyalkanoic acid and adjusted depending on the subject.

### Industrial Applicability

The adhesive composition containing polyhydroxyalkanoic acid (PHA) and the adhesive agent according to the present invention have, for example, excellent biodegradability in a natural environment, biocompatibility, and biodegradability, as well as adhesive strength, and can be used for many industrial and medical applications because the adhesive strength can be adjusted.

## Claims

1. An adhesive composition comprising polyhydroxyalkanoic acid, wherein the polyhydroxyalkanoic acid substantially consists only of 3-hydroxybutanoic acid and 3-hydroxyhexanoic acid as repeating units.

2. The adhesive composition according to claim 1, wherein the polyhydroxyalkanoic acid is contained as a copolymer of 3-hydroxybutanoic acid and 3-hydroxyhexanoic acid, P (3-HB-co-3-HH) .

3. An adhesive agent comprising the adhesive composition according to claim 1 or 2.

4. The adhesive agent according to claim 3, wherein the adhesive agent is a hot-melt adhesive.

5. A method for changing an adhesive strength of the adhesive agent according to claim 3 or 4, by changing a content proportion of the 3-hydroxybutanoic acid and the 3-hydroxyhexanoic acid in the adhesive composition contained in the adhesive agent.
